# EUROPEAN PATENT APPLICATION

(11) **EP 2 711 390 A1**
(43) Date of publication of application: **26.03.2014**
(21) Application number: 13185885.4
(22) Date of filing: 25.09.2013
(51) Int. Cl.: C08L 17/00

(54) **Elastomeric compositions comprising reclaimed vulcanized elastomer particles and improved methods of manufacture thereof**

(30) Priority: 25.09.2012 US 201261705413 P
(71) Applicant: Lehigh Technologies, Inc., Tucker, GA 30084 (US)
(72) Inventor: Rosenmayer, Charles, Decatur, GA Georgia 30030 (US); Papp, Frank, Fort Mill, SC South Carolina 29707 (US)
(74) Representative: Lloyd, Patrick Alexander Desmond

(57) **Abstract**

Methods for making elastomer compounds are described. The compounds include reclaimed vulcanized elastomer materials such as micronized rubber powders (MRP). The elastomeric compositions exhibit lower tensile strength variability. As described herein, shorter mixing times can be used to achieve the same minimum tensile strength as composition containing no reclaimed material. The elastomeric compositions may include various proportions of reclaimed vulcanized elastomer materials. A rubber compound is also described which comprises reclaimed material and which has a minimum tensile strength equal to or higher than a predetermined minimum tensile strength associated with a compound containing no reclaimed material. The rubber compound is manufactured with a reduced mixing time compared to that of the compound with no MRP.

## Description

### TECHNICAL FIELD

The present disclosure relates generally to elastomer compounds and compositions comprising reclaimed elastomer materials (micronized rubber powders), and more particularly, to improved methods of manufacturing such products.

### BACKGROUND

Reclaimed elastomer materials (i.e., "reclaimed materials," "micronized rubber powders," or "MRP"), which include reclaimed vulcanized elastomer particles, are used in a variety of applications, including elastomer compositions (e.g., tire tread compounds for vehicle tires), plastics compositions (e.g., as fillers for polyolefins), asphalt fillers, and others. In many of these applications, the reclaimed elastomer particles are used as "filler" in place of a portion of the virgin compound material. One of the primary reasons for the use of vulcanized elastomer particles is cost. Namely, the vulcanized elastomer particles typically are significantly less expensive than virgin (i.e., non-reclaimed) rubber or plastic, and can be used as a "filler" in elastomer or plastic compositions to reduce the overall manufacturing cost of the composition. Further, because vulcanized elastomer particles are typically made from recycled or reclaimed material (e.g., vulcanized scrap from manufacturing processes and used tires or other elastomeric products), reincorporating vulcanized elastomer particles into elastomer and plastic compositions reduces landfill waste and results in a more environmentally-friendly product.

Generally, the vulcanized elastomer particles or MRP used in such reclaimed elastomer materials are small in size (e.g., 2 mm or less in diameter) and are produced in a variety of ways, including by cryogenic grinding, chemical processes, and other methods. As set forth above, the reclaimed elastomer material used to manufacture the particles is typically obtained from previously-manufactured products (e.g., unused or used vehicle tires) or from vulcanized scrap generated during a manufacturing process (e.g., vulcanized scrap generated from the tire manufacturing process).

Conventionally, the compositions of these reclaimed elastomer materials conform to the American Society for Testing and Materials (ASTM) standards (and, specifically, to ASTM D-5603-01 for rubber compounding materials), which classifies materials according to the maximum size of the particles comprising the composition. Generally, particle sizes are classified according to U.S. Standard Mesh sizes (or simply, "mesh"). For example, an 80 mesh particle comprises a diameter of approximately 177 µm, a 140 mesh particle comprises a diameter of approximately 105 µm, a 325 mesh particle comprises a diameter of approximately 44 µm, and so on. U.S. Standard Mesh sizes are readily available from many public sources and are known to those of ordinary skill in the art.

However, it was assumed previously that elastomer compositions comprising MRP would exhibit poor performance characteristics as compared to elastomer compositions with no reclaimed materials and would, therefore, be relatively undesirable for many applications. Specifically, the conventional assumption has been that elastomer (e.g., rubber) compositions and other material compositions with reclaimed elastomer materials would exhibit strength and durability properties (e.g., measured through tensile strength tests) less desirable than virgin elastomer materials. In scenarios requiring certain minimum strength or durability thresholds, it was presumed that elastomer compounds with MRP may be unsuitable.

Therefore, there is a long-felt but unresolved need for efficiently produced elastomer compositions that comprise reclaimed elastomer material, but which retain mechanical properties comparable to elastomer compositions containing no reclaimed material.

### SUMMARY

A method for manufacturing elastomer compounds having a predetermined minimum tensile strength is provided, the method comprising:
determining a conventional mixing time associated with manufacturing an elastomer compound having no micronized rubber powder (MRP);
determining a predetermined minimum tensile strength associated with the elastomer compound;
adding a predetermined amount of MRP to a batch of the elastomer compound; and
mixing the batch of the elastomer compound with the predetermined amount of MRP for a time less than the conventional mixing time associated with manufacturing the elastomer compound,
forming a manufactured elastomer compound from the mixed batch of the elastomer compound with the predetermined amount of MRP;
wherein the manufactured elastomer compound has a minimum tensile strength greater than or equal to the predetermined minimum tensile strength associated with the elastomer compound.

A method for manufacturing elastomer compounds having an improved minimum tensile strength is also provided, the method comprising:
determining a conventional mixing time associated with manufacturing an elastomer compound having no micronized rubber powder (MRP);
adding a predetermined amount of MRP to a batch of the elastomer compound; and
mixing the batch of the elastomer compound with the predetermined amount of MRP for a time equal to the conventional mixing time associated with manufacturing the control elastomer compound,
forming a manufactured elastomer compound from the mixed batch of the elastomer compound with the predetermined amount of MRP;
wherein the manufactured elastomer compound has a minimum tensile strength greater than a predetermined minimum tensile strength associated with the elastomer compound.

A rubber compound comprising MRP is also provided, said compound having a minimum tensile strength equal to or higher than a predetermined minimum tensile strength associated with a compound containing no MRP, wherein the rubber compound comprising MRP is manufactured with a reduced mixing time as compared to a predetermined mixing time of the compound with no MRP.

These and other aspects, features, and benefits of the claimed invention(s) will become apparent from the following detailed written description of the preferred embodiments and aspects taken in conjunction with the following drawings and tables, although variations and modifications thereto may be effected without departing from the spirit and scope of the novel concepts of the disclosure.

### BRIEF DESCRIPTION OF THE DRAWINGS

The accompanying figures illustrate one or more embodiments and /or aspects of the disclosure and, together with the written description, serve to explain the principles of the disclosure. Wherever possible, the same reference numbers are used throughout the tables and figures to refer to the same or like elements of an embodiment, and wherein:
FIG. 1 is a bar chart showing tensile strength data and variation in tensile strength for a plurality of elastomer compositions comprising various MRP ratios and particle size distributions.
FIG. 2 is a bar chart showing average within batch tensile strength variability of elastomer compositions comprising various MRP ratios.
FIG. 3 is a bar chart showing the minimum tensile strength for various elastomer compositions wherein minimum tensile strength is defined as three standard deviations below the mean tensile strength for the composition.

### DETAILED DESCRIPTION

For the purpose of promoting an understanding of the principles of the present disclosure, reference will now be made to the embodiments illustrated in the tables and attached exhibits, and specific language will be used to describe the same. It will, nevertheless, be understood that no limitation of the scope of the disclosure is thereby intended; any alterations and further modifications of the described or illustrated embodiments, and any further applications of the principles of the disclosure as illustrated therein are contemplated as would normally occur to one skilled in the art to which the disclosure relates. All limitations of scope should be determined in accordance with and as expressed in the claims.

Various tables are included herein which help to explain the present subject matter and set forth experimental results relating to the same. These tables include experimental results relating to tensile strength testing of cured elastomer composition samples and an exemplary formulation of a control elastomer composition comprising no MRP.

According to an embodiment, aspects of the present disclosure generally relate to elastomeric compositions comprising reclaimed vulcanized elastomer materials (micronized rubber powders or MRP), wherein the elastomeric compositions comprising MRP exhibit a lower tensile strength variability during testing. For example, elastomeric compositions described herein may comprise reclaimed vulcanized elastomer materials (micronized rubber powders) comprising various proportions of MRP. According to one embodiment, these reclaimed vulcanized elastomer materials are used within standard rubber compounds (such as those used for vehicle tires) as replacements for conventional reclaimed vulcanized elastomer materials with relatively uniform particle size distributions that conform to ASTM standards. As described herein, experiments have determined that elastomeric compositions (e.g., tread rubber compounds) that include reclaimed vulcanized elastomer materials maintained a lower mean tensile strength, but demonstrated a lower tensile strength variability.

According to another embodiment, aspects of the present disclosure also relate to testing of different elastomeric compositions comprising a ratio of reclaimed vulcanized elastomer materials (micronized rubber particles) comprising one uniform particle size distribution per sample. For example, elastomeric compositions described herein may comprise 10% of reclaimed vulcanized elastomer material wherein the size distribution may comprise 140 mesh. As will be understood, when reclaimed vulcanized elastomer material is added to elastomeric compounds, an equal amount of virgin compound material is removed from the overall composition.

According to a further embodiment of the present disclosure, findings related to improved tensile strength variability also decrease the mixing time associated with mixing the various ingredients comprising the elastomeric compositions, thereby reducing the overall mixing costs. As described herein, experiments have determined that elastomeric compositions comprising various ratios of reclaimed vulcanized elastomer demonstrated lower tensile strength variability and raised the minimum tensile strength of the elastomer compositions. As will be understood and appreciated by one skilled in the art, using an elastomer composition comprising MRP, which raises the minimum tensile strength, may make specific applications more affordable when a minimum strength or durability threshold is required for that application.

As used herein and recited in the enclosed figures and tables, the term "PolyDyne" or "PD" refers to a brand name of vulcanized elastomer particles (e.g., cured rubber particles, recycled rubber particles, micronized rubber powder, or MRP) produced by Lehigh Technologies, Inc. of Tucker, GA. According to one embodiment, the particles described herein are produced via a cryogenic grinding system described by U.S. Patent No. 7,445,170, entitled *Process and Apparatus for Manufacturing Crumb and Powder Rubber,* and an impact mill as described by U.S. Patent No. 7,861,958, entitled *Conical-Shaped Impact Mill.* In other embodiments of the present disclosure, these micronized rubber powders are produced via a variety of other known processes and techniques as will occur to one of ordinary skill in the art, and the powders used herein are not limited to the specific cryogenic grinding processes described herein.

As also used herein and recited in incorporated figures and tables, "PD80" generally refers to a reclaimed elastomer material composition (i.e., micronized rubber powder) conforming to conventional 80 mesh standards, "PD40" generally refers to MRP conforming to conventional 40 mesh standards, and so on. The term "PD84" generally refers to a reclaimed elastomer material composition having a broad distribution of particle sizes (and not conforming to any specific ASTM standards). Thus, PD40, PD80, PD84, PD 140, etc. are proprietary brand names used to describe specific reclaimed elastomer material compositions (micronized rubber powders) produced by Lehigh Technologies, Inc., which have predetermined particle size distributions. PD84 corresponds to a proprietary composition of particles having a broad particle size distribution. As will be understood and appreciated, the specific formulations and particle size distributions associated with PD40, PD80, PD84, or PD140 (or any other formulation) are presented purely for illustrative purposes, and elastomeric compositions, reclaimed elastomer material compositions, or other elastomer formulations contemplated by the present disclosure are not limited to the specific characteristics or features recited herein.

As noted previously, it heretofore was assumed that elastomer compositions comprising MRP (e.g., PD80 or PD84) would exhibit poor performance characteristics as compared to similar compositions including no MRP and would, therefore, be less-desirable for many elastomer compositions (e.g., tire tread compositions). To confirm this assumption and to identify and collect statistical measures relating to strength and other durability characteristics of elastomer compositions, sample elastomer formulations comprising various percentages of MRP were produced such that their performance characteristics could be tested and compared to each other and to control samples comprising no MRP, such as the exemplary control formulation shown in Table 1. During experimentation, the elastomer composition samples that were produced for testing were prepared from a standard tire tread formulation using a 2-3 pass mix procedure, batch replication, and randomization (e.g., mixing, curing, and testing). Further, a t-test was used to ensure the statistical differences between the sets of test specimens were consistent and the results of the t-test confirmed the statistical differences between the sets were within a greater than 99 percent confidence.

The experimental parameters, testing criteria, and results of the tests are described herein. Further, Table 1 illustrates an exemplary elastomer composition that was used for testing purposes. The formulation shown in Table 1 includes no MRP. When MRP was added to the composition of Table 1 according to the "over batch weight" addition method (as will be understood by one of ordinary skill in the art), the percentage of other composition materials was reduced accordingly in a conventional manner. For example, if the compound batch weight without the reclaimed material is 20 kg and if 5 % by weight of reclaimed material is used, the batch weight would then be 21 kg (i.e., 20 + 1 kg of reclaimed material) for the batch containing the reclaimed material using the over batch weight addition method. As will be understood by one of ordinary skill in the art, the sample control formulation described in Table 1 and the resulting formulations wherein MRP is added to the control compound, are used purely for illustrative purposes, and are not intended to be limiting of the elastomer compositions or formulations that could be used in connection with aspects of the present disclosure.

**Table 1. Formulation of a control elastomer composition comprising no MRP.**

| **Feature** | **Control** |
|---|---|
| **Units** | **PHR** |
| **ESBR1500 (Non-oil extended)** | **40.00** |
| **Carbomix SBR BMB 1847K** | **67.50** |
| **High Cis PBR (CB 1220)** | **30.00** |
| **PD40** | |
| **PD84** | |
| **PD80** | |
| **PD140** | |
| **Nytex 4700 Process Oil** | **5.00** |
| **Struktol 40MS** | **1.00** |
| **Alkyl Phenol Formaldehyde Novalak Resin** | **2.00** |
| **N339 Carbon Black** | **42.50** |
| **6PPD Antidegradant** | **2.00** |
| **TMQ Antidegradant** | **1.00** |
| **Microcrystalline and Paraffin Wax Blend** | **2.00** |
| **Zinc Oxide Dispersion (85% ZnO)** | **3.53** |
| **Stearic Acid** | **2.00** |
| **TBBS Accelerator** | **1.00** |
| **DPG Accelerator** | **0.10** |
| **Sulfur Dispersion (80% Sulfur)** | **2.75** |
| **Retarder N-(cyclohexylthio) phthalimide** | **0.10** |
| **Total PHR Finish Batch** | **202.48** |
| **2011 US$/kg Finish Batch** | **3.084** |
| **2011 US$/l Volume Cost** | **3.503** |
| **Density kg/l** | **1.136** |
| **Natural Rubber Wgt %** | **0.0%** |
| **Synthetic Rubber Wgt %** | **49.4%** |
| **Carbon black Wgt %** | **32.1%** |
| **Fabric, fillers, chemicals, etc. Wgt%** | **18.5%** |
| **Total Wgt %** | **100.0%** |
| **Total PHR Polymer** | **100.00** |
| **Total Wgt % Polymer** | **49.4%** |
| **Total PHR Carbon Black** | **65.00** |
| **Total PHR Oil** | **20.00** |
| **Wgt % Oil** | **9.88%** |
| **Total Wgt % Sulfur** | **1.09%** |
| **Wgt % Micronized Rubber Powder** | **0.** |

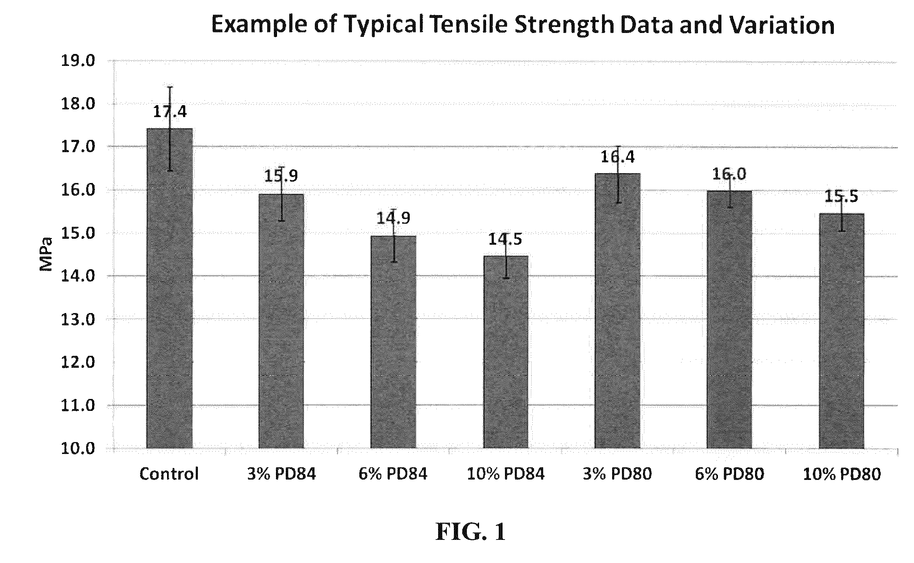

FIG. 1 is a bar chart showing tensile strength data and variation in tensile strength for the control composition and for compositions containing 3%, 6% and 10% by weight of two different MRPs (PD84 and PD80). Tensile strength was measured as per test method ASTM D 412 in MPa. As would generally be expected, the control sample comprising no reclaimed material displayed greater mean tensile strength than the samples comprising various percentages of MRP. For example, the sample comprising 3% of PD84 had a mean tensile strength of 15.9 MPa, and the sample comprising 6% PD80 had a mean tensile strength of 16.0 MPa, as compared to the control sample, which was shown to have a mean tensile strength of 17.4 MPa. Surprisingly, however, the samples comprising MRP demonstrated a lower tensile strength variability.

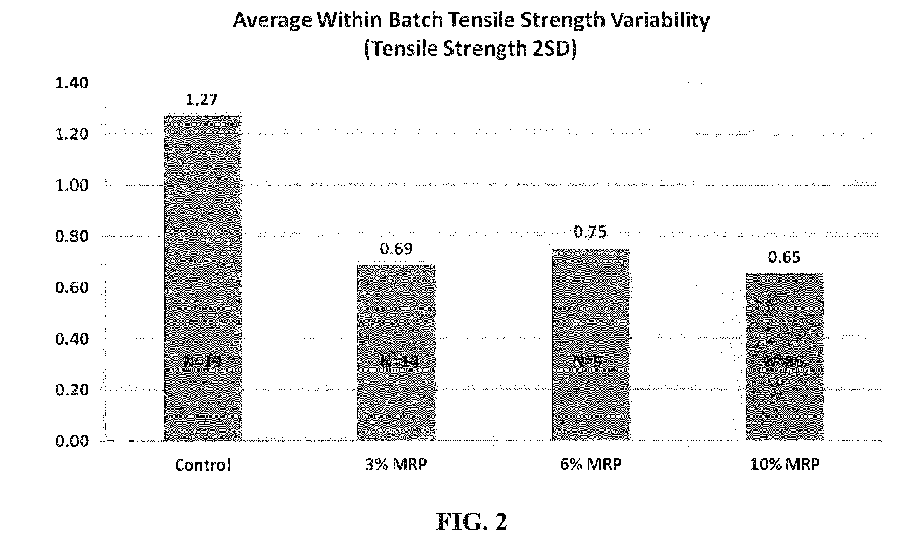

FIG. 2 is a bar chart showing average within batch tensile strength variability for elastomeric compositions comprising 3%, 6%, and 10% MRP. As can be seen from FIG. 2, the compositions containing reclaimed material have a lower tensile strength variability than the control sample. For example, and as shown in Table 2, batches (i.e., samples of elastomeric compositions) comprising 3% MRP had an average tensile strength variability (measured at two standard deviations) of 0.69 MPa, while the control samples containing no MRP had an average tensile strength variability (measured at two standard deviations) of 1.27 MPa.

**Table 2. Test results of 3% MRP vs. control sample.**

| | Control | 3% MRP |
|---|---|---|
| Mean (Tensile 2SD in MPa) | 1.27 | 0.69 |
| Variance | 0.25 | 0.09 |
| Observations | 19 | 14 |
| Hypothesized Mean Difference | 0 | |
| Degrees of Freedom | 30 | |
| p | 0.01 | |
| **t Stat** | **4.16** | |
| P(T<=t) two-tail | 0.00024 | |
| **T Critical two-tail** | **2.75** | |

As shown in the embodiment described in Table 3, similar results were achieved for compositions containing 6% MRP.

**Table 3. Test results of 6% MRP vs. control sample.**

| | Control | 6% MRP |
|---|---|---|
| Mean (Tensile 2SD in MPa) | 1.27 | 0.75 |
| Variance | 0.25 | 0.04 |
| Observations | 19 | 9 |
| Hypothesized Mean Difference | 0 | |
| Degrees of Freedom | 26 | |
| p | 0.01 | |
| **t Stat** | **3.86** | |
| P(T<=t) two-tail | 0.00067 | |
| **T Critical two-tail** | **2.78** | |

In particular, the elastomeric compositions containing 6% MRP had an average tensile strength variability of 0.75 MPa in contrast with the control samples comprising an average tensile strength variability of 1.27 MPa.

Similar results were observed for compositions containing 10% MRP. In particular, as can be seen from the data in Table 4, elastomeric compositions containing 10% MRP had an average tensile strength variability of 0.65 MPa whereas the control had an average tensile strength variability of 1.27 MPa. Generally, it was observed that elastomer compositions containing MRP exhibit an approximately 45% decrease in tensile strength variability.

**Table 4. Test results of 10% MRP vs. control sample.**

| | Control | 10% MRP |
|---|---|---|
| Mean (Tensile 2SD in MPa) | 1.27 | 0.65 |
| Variance | 0.25 | 0.14 |
| Observations | 19 | 86 |
| Hypothesized Mean Difference | 0 | |
| Degrees of Freedom | 23 | |
| p | 0.01 | |
| **t Stat** | **2.06** | |
| P(T<=t) two-tail | 4.06E.-05 | |
| **T Critical two-tail** | **2.78** | |

A significant takeaway from these results is that although compositions with MRP exhibited lower ***average*** tensile strength characteristics, certain of these compositions actually exhibited higher ***minimum*** tensile strength properties. In certain applications (e.g., the tire industry), an elastomer composition's tensile strength is evaluated not based on its ***mean*** tensile strength but instead based on its ***minimum*** tensile strength. Therefore, including MRP in elastomer compositions is advantageous in certain applications as it is shown to yield lower average tensile strength variability, which in turn yields higher overall minimum tensile strength (assuming other composition properties, such as the materials used in the composition, mix times, etc., are held constant).

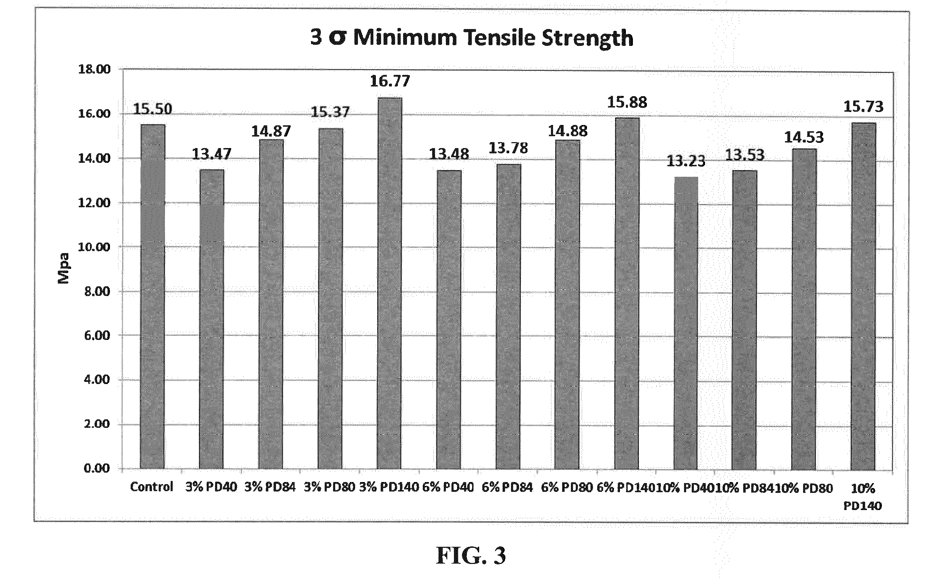

FIG. 3 is a bar chart showing the minimum tensile strength for various elastomer compositions containing 0% (control), 3%, 6% and 10% by weight reclaimed material. As can be seen from FIG. 3, because of lower average tensile strength variability certain elastomer compositions containing MRP have higher overall minimum tensile strength than elastomer compositions with no reclaimed material. Minimum tensile strength is defined in FIG. 3 as three standard deviations below the mean tensile strength for the sample. As shown in FIG. 3, batches containing, for example, 3% PD140, had a minimum tensile strength of 16.77 MPa, whereas the control sample (with no MRP) had a minimum tensile strength of 15.50 MPa. As noted, this unexpected result is advantageous as it was previously assumed that elastomer compositions incorporating reclaimed material exhibited poor performance characteristics (i.e., exhibited performance characteristics inferior to elastomer compositions with no reclaimed material). Further, as previously noted, inclusion of reclaimed material in elastomer compositions can lead to reduced production costs.

The testing of the sample elastomer compositions comprising various percentages of MRP, the results of which are shown in FIG. 3, further indicated that incorporating MRP into elastomer compositions yielded improved batch quality as compared to elastomer compositions with no reclaimed material. While not wishing to be bound by theory, it is believed that incorporating reclaimed material into the formulation promoted shear in the mixing process, thus resulting in better dispersion throughout the batch. Put differently, it is believed that the MRP acted as a process aid and assisted in homogenizing the elastomer composition mix. As will be understood by those of ordinary skill in the art, a more homogenous mix is significant as uniform distribution of all ingredients is important in manufacturing elastomer compositions.

The findings relating to improved minimum tensile strength characteristics and improved homogeneity of elastomer compositions including MRP are unexpected and advantageous for several reasons. Specifically, one aspect of manufacturing elastomer compositions that affects production time and overall cost is the mixing time associated with mixing the various ingredients in a given composition (such as the composition illustrated in Table 1). Because elastomer compositions with MRP tend to produce a more homogeneous and thorough batch mix, it is possible to reduce the mix time of a given elastomer composition (as compared to a conventional mix time for a similar elastomer composition with no MRP) and still arrive at a predetermined minimum tensile strength threshold. For example, if a given virgin elastomer composition requires a mix time of six minutes to produce an elastomer compound batch having a predetermined minimum tensile strength, the mix time for a similar elastomer composition having MRP may only be five minutes to produce a batch with the same minimum tensile strength value for the compound.

Alternatively, if mix times in the production of elastomer compositions are held constant, incorporating MRP of certain particle sizes (for example, in one embodiment, MRP of size PD 140 and smaller) into a given composition should result in an increased minimum tensile strength over virgin elastomer compositions. This result enables the use of certain (perhaps less expensive) compositions in applications that were previously considered unsuitable for such compositions.

According to some embodiments, a method for producing a rubber compound having a prescribed minimum tensile strength is provided. The method comprises including the use of MRP in the compound and employing a shorter mixing time than would have been used if the MRP were not incorporated. According to some embodiments, a rubber compound comprising MRP is provided wherein the compound has reduced tensile strength variability and/or improved minimum tensile strength compared to a composition without MRP. According to some embodiments, the MRP used in the composition comprises 100 mesh or finer particles. According to some embodiments, the MRP used in the composition comprises 140 mesh or finer particles.

The foregoing description of the exemplary embodiments has been presented only for the purposes of illustration and description and is not intended to be exhaustive or to limit the inventions to the precise forms disclosed. Many modifications and variations are possible in light of the above teaching.

The embodiments were chosen and described in order to explain the principles of the inventions and their practical application so as to enable others skilled in the art to utilize the inventions and various embodiments and with various modifications as are suited to the particular use contemplated. Alternative embodiments will become apparent to those skilled in the art to which the present inventions pertain without departing from their spirit and scope. Accordingly, the scope of the present inventions is defined by the appended claims rather than the foregoing description and the exemplary embodiments described therein.

## Claims

1. A method for manufacturing elastomer compounds having a predetermined minimum tensile strength, the method comprising:
determining a conventional mixing time associated with manufacturing a elastomer compound having no micronized rubber powder (MRP);
determining a minimum tensile strength requirement for the elastomer compound;
adding a predetermined amount of MRP to a batch of the elastomer compound; and
mixing the batch of the elastomer compound with the predetermined amount of MRP for a time less than the conventional mixing time associated with manufacturing the elastomer compound,
forming a manufactured elastomer compound from the mixed batch of the elastomer compound with the predetermined amount of MRP;
wherein the manufactured elastomer compound has a minimum tensile strength greater than or equal to the predetermined minimum tensile strength associated with the elastomer compound.

2. The method of claim 1, wherein the elastomer compound having no MRP comprises a plurality of ingredients, and wherein the amounts of the ingredients are reduced for the elastomer compound with the predetermined amount of MRP.

3. An elastomer compound manufactured according to the method of claim 1.

4. A method for manufacturing elastomer compounds having improved minimum tensile strengths, the method comprising:
determining a conventional mixing time associated with manufacturing an elastomer compound having no micronized rubber powder (MRP);
adding a predetermined amount of MRP to a batch of the elastomer compound;
mixing the batch of the elastomer compound with the predetermined amount of MRP for a time equal to the conventional mixing time associated with manufacturing the elastomer compound; and
forming a manufactured elastomer compound from the mixed batch of the elastomer compound with the predetermined amount of MRP ;
wherein the manufactured elastomer compound has a minimum tensile strength greater than a predetermined minimum tensile strength associated with the elastomer compound.

5. The method of claim 1 or 4, wherein the MRP comprises 100 mesh or smaller particles.

6. The method of claim 1 or 4, wherein the MRP comprises 140 mesh or smaller particles.

7. The method of claim 4, wherein the elastomer compound having no MRP comprises a plurality of ingredients, and wherein the amounts of the ingredients are reduced for the elastomer compound with the predetermined amount of MRP.

8. An elastomer compound manufactured according to the method of claim 4.

9. The method of claim 1 or 4, wherein the amount of MRP added is at least 3% by weight.

10. The method of claim 1 or 4, wherein the amount of MRP added is at least 6% by weight.

11. The method of claim 1 or 4, wherein the amount of MRP added is at least 10% by weight.

12. The method of claim 1, wherein the amount of MRP added is at least 3% by weight and wherein the MRP comprises 140 mesh or smaller particles.

13. A rubber compound comprising MRP, said compound having a minimum tensile strength equal to or higher than a predetermined minimum tensile strength associated with a compound containing no MRP, wherein the rubber compound comprising MRP is manufactured with a reduced mixing time as compared to a predetermined mixing time of the compound with no MRP.

14. The rubber compound of claim 13, wherein the MRP comprises 100 mesh or finer.

15. The rubber compound of claim 13, wherein the MRP comprises 140 mesh or finer.
